Europäisches Patentamt

European Patent Office

Office européen des brevets

(19)

(11) Publication number: **0 174 723**
A2

(12) # EUROPEAN PATENT APPLICATION

(21) Application number: **85305347.8**

(22) Date of filing: **26.07.85**

(51) Int. Cl.⁴: **B 21 D 51/20**
**B 21 D 51/32**

(30) Priority: **10.08.84 GB 8420338**

(43) Date of publication of application:
**19.03.86 Bulletin 86/12**

(84) Designated Contracting States:
**AT BE CH DE FR GB IT LI NL SE**

(71) Applicant: **Blagden Industries PLC**
**16-18 Hatton Garden**
**London EC1N 8FJ(GB)**

(72) Inventor: **Hardy, Lewis William**
**Victor Blagden (Manchester) Ltd. Westinghouse Road**
**Trafford Park Road Manchester(GB)**

(74) Representative: **Smith, Geoffrey Leonard et al,**
**Marks & Clerk Friars House 6 - 10 Parkway**
**Chelmsford Essex CM2 0NF(GB)**

(54) **Drum conversion.**

(57) To convert an open topped curled rim drum to a tight head drum a portion of the rim 2a is opened out by means of a lever or jemmy. The nose 10 of a plough 9 is then inserted into the curled rim, and the opened out portion is gripped between drive rollers 12, 13, at least one of which is driven. A support roller 11 bears against the inner wall of the drum opposite the plough 9. The drive rollers 12, 13 pull the drum rim over the plough to uncurl the rim and form it into a laterally extending flange 2b which is then formed into a cylindrical extension 2c of the drum body 1 for use in forming a rolled seam 7 with a drum end to produce a tight head drum.

FIG.1a.

FIG.1b.

FIG.1c.

FIG.1d.

./...

EP 0 174 723 A2

Croydon Printing Company Ltd.

FIG.2.

. 1 -

## DRUM CONVERSION

The present invention relates to drums, more particularly the invention relates to conversion of open head steel drums to tight head drums, particularly 45 gallon or 210 litre drums.

There is a demand for reconditioned drums, both open head and tight head or closed end drums. When reconditioning tight head drums it is sometimes necessary to remove an end of the drum in order to clean the inside of the drum adequately. The drum can then be converted into an open head drum( a drum with a removable lid) or an end can be refitted using a rolled or welded seam.

There is often a shortage of tight head drums for reconditioning The present invention aims to provide a method of converting an open head drum into a tight head drum.

A first aspect of the invention provides a method of converting an open head drum having a curled rim at the end thereof to a tight head drum, the method comprising the step of inserting a plough into the drum rim and rotating the drum and plough relative to one another substantially about the drum axis to uncurl the rim, and fixing an end to the drum by means of the uncurled rim to form a tight head drum.

Preferably the rim is uncurled to the extent that the uncurled portion forms a flange on the drum end projecting at least 90° from the drum wall.

Preferably the uncurled rim is rolled between rollers located down stream of the plough, the rollers preferably forming the uncurled rim into a flange projecting from the drum wall at an angle of about 130°.

After the rim is uncurled it is preferably formed into a cylindrical extension of the drum body, this may be done by rolling it between rollers. However this may leave corrugations in the drum body end, hence the flange is preferably worked by metal spinning which will remove any stretch from the uncurled rim portion.

Thereafter the drum body has a cylindrical end to which a drum end may be attached, for example by using a rolled or welded seam, using prior art methods.

To insert the plough into the drum rim, the rim may be jemmied open for a short length. The rollers downstream of the plough are preferably used to rotate the drum, and so the rim is preferably opened for a length sufficient to receive the plough and rollers. At least one of the rollers is driven, and the rollers are movable towards one another to grip the uncurled or opened rim therebetween.

A guide roller is preferably used to support the inner wall of the drum adjacent the plough. Preferably the guide roller has a peripheral flange extending over the upper suface of the rim.

Preferably the plough comprises an elongate member which tapers towards a nose thereof. An inner surface of the plough is curved to match the curvature of the drum body, 11¼ inches(28.6 cm) for a 210 litre drum, so as to fit snugly thereagainst,

The nose is preferably radiused at its underside outer corner, the nose tapering upwardly to its front end, with the radius tapering to the rear.

Preferably the rollers comprise a lower roller which supports the uncurled rim at the underside thereof and an upper roller which is urged against the lower roller to sandwich the rim therebetween. The upper roller preferably has a⁻ lip which extends around the radially inner surface of the rim portion to hold the drum against movement in the radial direction.

Preferably, during rotation the bottom of the drum is held against sideways movement.This may be achieved by performing the turning operation with the drum suspended by the rollers at an angle to the vertical, the lower portion of the drum resting against a roller. Guide arms may be provided either side of the drum at the top end to aid positioning between the rollers.

The invention also provides apparatus for performing the method of the invention and a plough and a pair of drive rollers as defined above.

Other preferred features of the invention will be apparent from the following description by way of example with reference to the accompanying drawings. in which :

Figures 1a to 1d show the conversion of an open topped drum to a tight head drum in accordance with the invention;

Figure 2 is a side view partly cut away of a a drum rim uncurling apparatus;

Figure 3 is a sectional view along the line A-A of Figure 2;

Figures 4a and 4b are side and cross-sectional views of a lower roller in accordance with the invention;

Figures 5a and 5b are side and sectional views of an upper roller in accordance with the invention;

Figure 6a is a view from above of a plough in accordance with the invention;

Figure 6b is an end view in the direction of arrow B of the plough of Figure 6a;

Figure 6c is a cross-section along the line C-C of Figure 6a.

Figure 6d is a perspective view ( not to scale) of the plough.

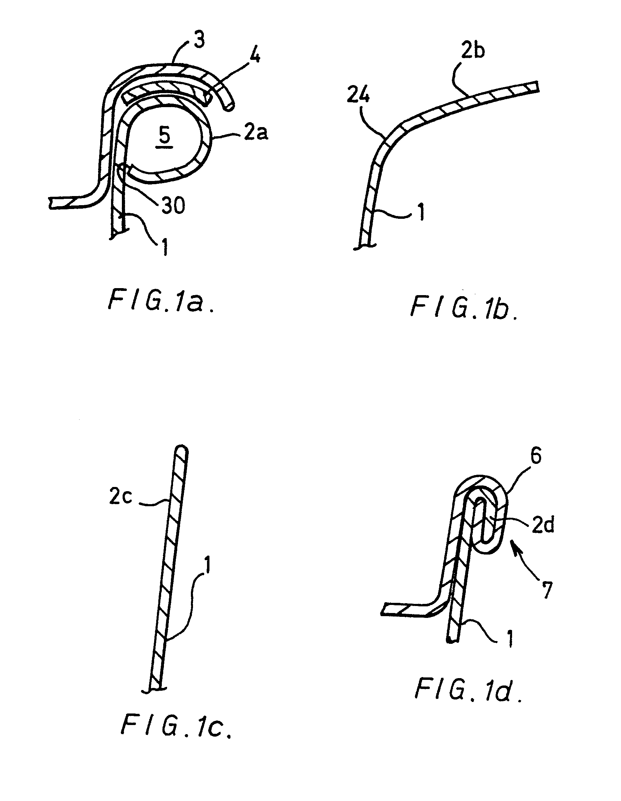

Figure 1 is a schematic view in cross-section of the curled rim and adjacent lid portion of an open-head drum, showing a drum body 1 having a curled rim 2a. A lid 3 sits on the rim 2a with a rubber or synthetic gasket 4 forming a seal therebetween. In use a clip, not shown, holds the lid 3 tight against the rim 2a. It can be seen that the rim 2a is a hollow flange formed by curling the material of the drum body over.

In accordance with the method of the invention a plough is inserted into the centre 5 of the rim 2a and uncurls the rim to form an outwardly diverted flange 2b which preferably subtends an angle greater than 90° to the drum wall 1.

The rim may be uncurled partway by the plough, a roller or rollers being used to uncurl and flatten the rim further, downstream of the plough. The flange is then turned upright to form a substantially cylindrical section 2c of the drum body by rolling the flange, or, preferably, by metal spinning to take any stretch out of the flange portion to avoid corrugations in the drum body end.

A drum end can then be fitted to the cylindrical end in a known manner, Figure 1d illustrating a typical rolled seam join 7 between a drum end 6 and drum body 1.

In practice the drum bodies of open-head and tight head drums are formed from sheets of the same size hence the converted drum will be of standard size. However the drum body may be trimmed if desired or necessary before fitting the drum end.

5

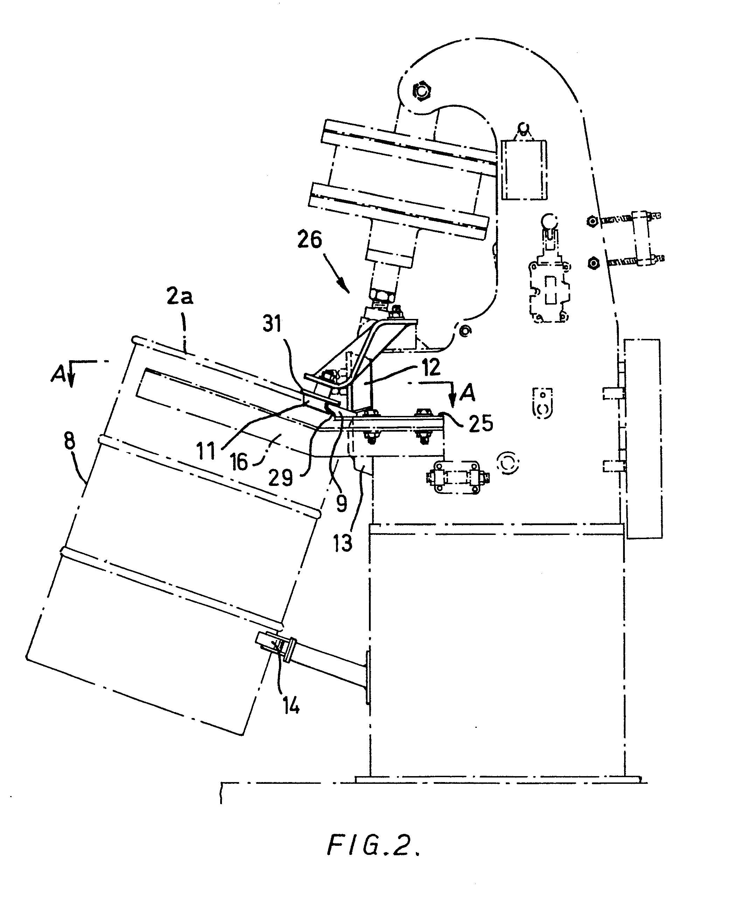

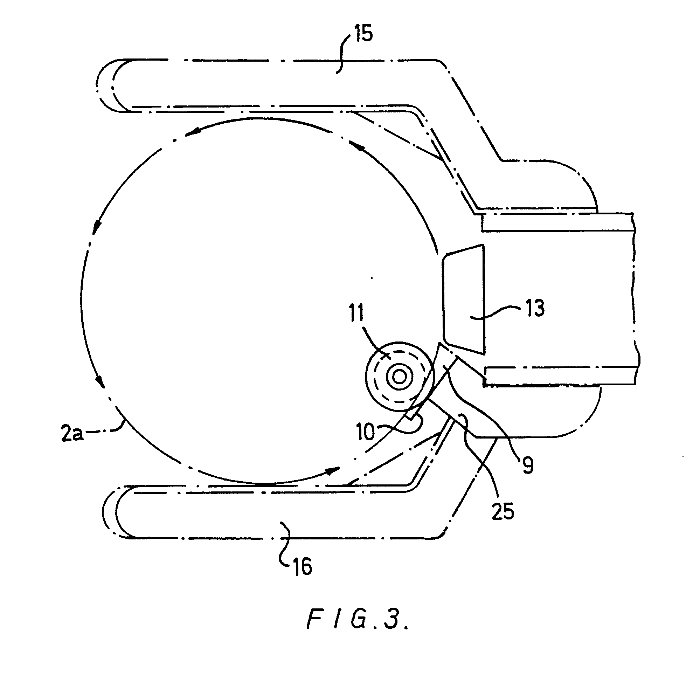

Figure 2 shows in outline a 45 gallon (210 litre) steel open-topped drum 8 mounted on a drum rim uncurling apparatus of the present invention, the lid 3 and gasket 4 having been removed. The drum rim 2a is towards the top. Figure 2 shows a plough 9 having a nose 10 (Figure 3) which projects within the rim 2a. A guide roller 11 bears against the inner wall of the drum, opposite the plough 9, and has a peripheral flange 31 which extends part way over the upper surface of the rim 2a. As seen in Figure 3, the drum is rotated anti-clockwise to drag the curled rim 2a over the plough 9, thus opening out the end into a flange (Figures 1a and 1b). The drum is rotated by upper and lower drive rollers 12, 13 which grip the opened rim portion 2b and serve also to work it in to a flange of the desired angle, Figure b.

The upper roller 12 is movable away from the lower roller 13 to allow insertion of a flange portion therebetween. Preferably both rollers are driven.

The drum body 8 is held at an angle to the vertical, the lower end resting against a castor wheel 14, the weight of the drum thus helps to prevent the lower end of the drum from skewing. Side arms 15, 16 extend either side of the drum body at the top

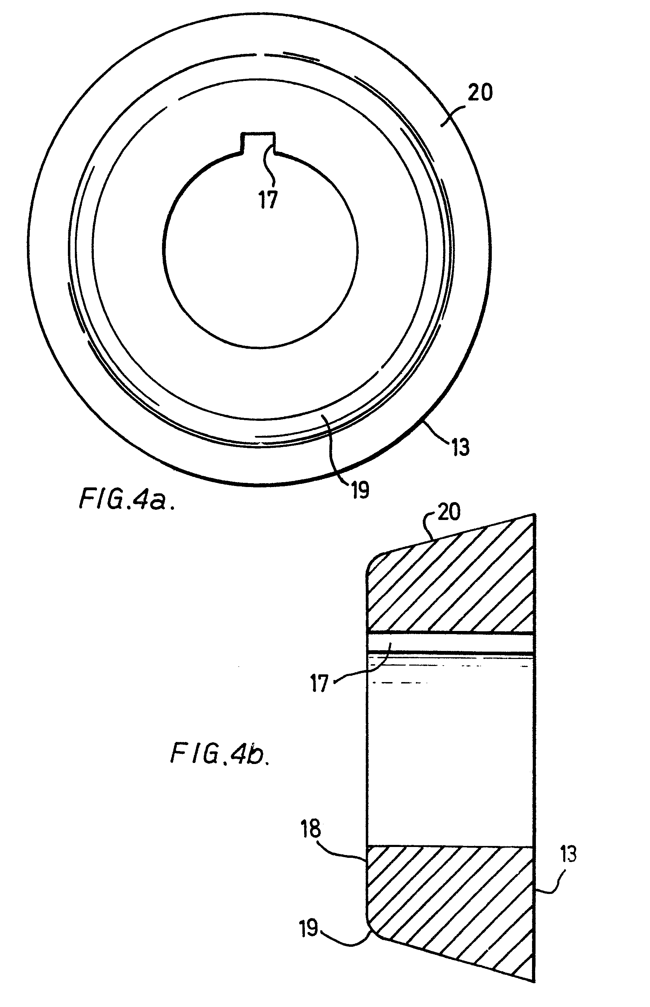

Figure 4a and 4b show the lower drive roller 13, which is keyed to a drive shaft, not shown, by means of a keyway 17. The outer surface 20 of the roller is tapered towards forward end 18 at an angle of 15° in the particular embodiment shown, and the forward end 18 of the roller is radiused at the outer edge 19.

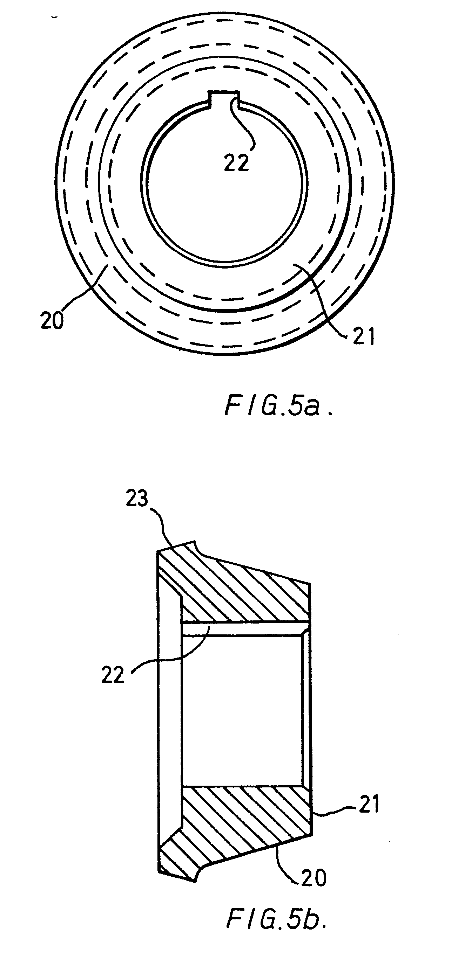

Figures 5a and 5b show the upper drive roller 12, which has a tapered outer surface 20, tapering towards its rear end 21. The roller 2 is keyed to a drive shaft, not shown, by means of a keyway 22. The drive shafts for the rollers 12, 13 are parallel, the tapering outer surfaces of the rollers 12, 13 matching one another. Roller 12 has a rim 23 at its forward end, the junction between the rim and surface 20 being radiused.

The radiused surfaces of the rollers 12, 13 complement one another, to grip the moulded flange at the region 24 (Fig 1b) without forming a sharp corner. The radii are preferably about 11/32 of an inch, (8.75 mm)..

The drum is canted over at an angle of about 25° to the vertical, so that the flange leaving the rollers 12, 13, which rotate on horizontal axes, will be at an angle of about 130 degrees to the drum body ( 90° + 15° + 25°).

It will be appreciated that the drum may be driven in some other way, for example by rollers gripping the side wall, however it is preferred to use rollers 12, 13 which serve also to roll the uncurled rim into a flat flange which can be worked on.

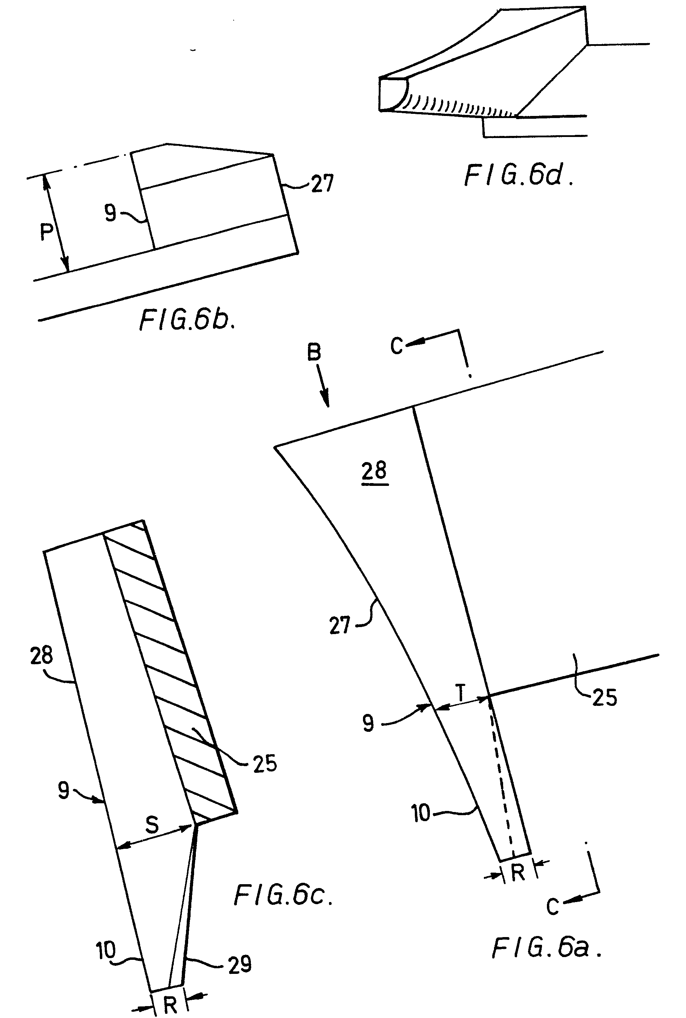

Figs 6a, 6b and 6c show a plough 9 mounted on a plate 25 which is bolted to the framework of the uncurling machine 26, see Figure 2. The general shape of the plough 9 is readily seen in Figures 2 and 6d The plough has an inner surface 27 which is curved to match the curvature of the drum body, having a radius of 11¼ inches( 28.6 cm) in the embodiment shown, the plough body tapering towards the nose 10 when seen in plan view, Figure 6a. Also, the plough body tapers when seen in side elevation, Figure 6c. The nose 10 tapers away from the support 25, and the upper surface 28 is sloped, at an angle of 4° to the support 25 in the embodiment shown. The nose 10 is radiused at the outer lower edge 29, which is contacted by the edge 30 of the curled rim 28 as it rides over the plough to be uncurled.

To operate the apparatus of the invention, a short length of the rim 2a is uncurled roughly. This may be done by hand using a jemmy or other lever. The drum is then mounted on the machine with plough nose 10 inserted into the centre 5 of the rim, roller 11 is then brought against the inner surface of the drum at the rim, and the rollers 12, 13 are brought together to clamp the uncurled rim portion, downstream of the plough 9..

Rollers 12, 13 are then driven, dragging the rim 2a over the plough nose 10 to uncurl it, and to form it between rollers 12, 13. The guide roller 11 may be moved into position with the roller 12. The roller 12 may be urged into position by an airdraulic or hydraulic piston.

The plough may be of steel. The dimensions and taper may be adapted to a particular type of rim to be uncurled. However an overall height (P) of $\frac{7}{8}$ inch (2.23 cm.) from the support 25 has been found preferable, with a leading nose size (R) of about $\frac{1}{4}$ inch (6.35 mm.)square cross-section, tapering out to about $\frac{3}{4}$ inch (1.9 cm.) high (S) and $\frac{3}{8}$ inche (8.3 mm.) wide (T) over $1\frac{1}{2}$ inches (3.8 cm).

It will be appreciated that the rim portion 2a need not be straightened completely to the position seen in Figure 7c, rather the outwardly extending flange could be squared off, i.e. at 90° to the drum body, and then rolled onto a drum end to form a seam. with a drum end.

CLAIMS

1. A method of converting an open head drum having a curled rim (2a) to a tight head drum, characterised in that a plough (9) is inserted into the rim (2a) and the plough (9) is rotated relative to the drum body (1) substantially about the axis of the drum to open the rim (2a) to form a laterally extending flange (2b), the flange (2b) being used to couple a drum end to the drum body (1) to form a tight head drum (Figure 1d).

2. A method as claimed in claim 1, characterised in that the uncurled rim portion is gripped between a pair of rollers (12,13), at least one of which is driven to pull the rim (2a) over the plough (9).

3. A method as claimed in claim 2, characterised in that the rollers form the uncurled rim into a flange (2b) subtending an angle of at least 90° to the drum body (1) and the uncurled rim (2b) is flattened to form a cylindrical extension (2c) of the drum body (1).

4. Apparatus for the conversion of an open head drum having a curled rim to a tight head drum, comprising a plough (9) for opening out the curled rim (2a) and drive means (12,13), for relatively drawing the rim (2a) over the plough (9).

5. Apparatus as claimed in claim 4, characterised in that the drive means (12,13) comprises a pair of rollers which grip the uncurled rim, downstream of the plough, at least one of the rollers being driven.

6.  Apparatus as claimed in claim 5, characterised in that roller (12) has a laterally extending flange (23) which extends within the drum body (1) to support a radially inner surface of the drum rim.

7.  Apparatus as claimed in claim 4,5 or 6, characterised in that a guide roller (11) is locateed against the inner drum wall opposite the plough and has a laterally extending flange (31) which extends at least partway over the upper surface of the rim (2a).

8.  Apparatus as claimed in any one of claims 4 to 7, charaterised in that the drum (8) is suspended at an angle to the vertical, a lower portion of the drum body bearing against a support member.

9.  Apparatus as claimed in any one of claims 4 to 8, characterised in that the plough comprises a nose portion (10) which tapers to a forward end thereof, and a lower and radially outer edge of the nose, relative to the drum, is radiused.

10.  Apparatus as claimed in any one of claims 4 to 9, characterised in that a surface (27) of the plough (9) is curved to fit against the drum wall.

FIG.1a.

FIG.1b.

FIG.1c.

FIG.1d.

0174723

FIG.2.

0174723

FIG.3.

0174723

**20**

**17**

**19**

**13**

*FIG.4a.*

**20**

**17**

**18**

**19**

**13**

*FIG.4b.*

FIG.5a.

FIG.5b.

FIG.6d.

FIG.6b.

FIG.6c.

FIG.6a.